# EUROPEAN PATENT SPECIFICATION

(11) **EP 3 192 724 B1**
(45) Date of publication and mention of the grant of the patent: **03.04.2019**
(21) Application number: 16151359.3
(22) Date of filing: 14.01.2016
(51) Int. Cl.: B62D 25/20

(54) **MOTOR-VEHICLE BODY STRUCTURE**
STRUKTUR FÜR EINE MOTORFAHRZEUGKAROSSERIE
STRUCTURE DE CARROSSERIE DE VÉHICULE À MOTEUR

(43) Date of publication of application: 19.07.2017
(73) Proprietor: FCA Italy S.p.A., 10135 Torino (IT)
(72) Inventor: CESARANO, Antonio, I-10135 Torino (IT); NOVEMBRINO, Davide, I-10135 Torino (IT); DEL NERO, Gianfranco, I-10135 Torino (IT)
(74) Representative: Notaro, Giancarlo

(56) References cited:
- EP-A2- 1 439 109
- WO-A1-2004/041564
- GB-A- 2 485 447
- GB-A- 2 490 019

## Description

### Field of the invention

The present invention relates to motor-vehicle structures of the type comprising:
- a floor structure,
- two lateral beams each welded to a respective longitudinal lateral edge of the floor structure,
- two rear beams wherein each rear beam is composed by a first front element and a second rear element connected to each other, wherein said first front element is welded to said floor structure and to the respective lateral beam and said second rear element is welded to said lateral beam and to a respective wheel housing,
- two attachment brackets each positioned at one of the opposite sides of the floor structure, wherein each attachment bracket is provided for the connection to a motor-vehicle suspension element, and is connected to the respective second rear element. Motor-vehicle structures of this type are disclosed for example in documents GB 2 490 019 A and WO 2004 041 564 A1.

### Object of the invention

The object of the present invention is to provide a motor-vehicle structure which has a torsional stiffness higher than known motor-vehicle structures, providing at the same time a motor-vehicle structure with low weight and with a relatively simple manufacturing technique.

A further object of the present invention is to provide a motor-vehicle structure which allows a control of the deformation areas resulting from a rear impact, in such a way that the motor-vehicle structure is deformed at predetermined areas thereof.

### Summary of the invention

In view of achieving the aforementioned objects, the subject matter of the invention is a motor-vehicle structure according to the features indicated at the beginning of the present description, characterized in that:
- each lateral beam comprises a front lateral beam element and a second rear lateral beam element welded to each other,
- each attachment bracket comprises an inner bracket and an outer bracket, wherein said inner bracket is welded to said second rear element bracket, wherein said inner bracket is welded to said second rear element and said outer bracket is welded to said second rear element and to said rear lateral beam element,
- said second rear element has a substantially vertical wall adjacent to said rear lateral beam element, wherein said second rear element and said rear lateral beam element are welded to each other at said substantially vertical wall.

Additional preferred features of the motor-vehicle structure according to the present invention are illustrated in the annexed dependent claims.

### Description of a preferred embodiment

Further features and advantages of the invention will become apparent from the following description with reference to the annexed figures, given purely by way of non limiting example, in which:
- figure 1 is a bottom view of a motor-vehicle structure according to the present invention,
- figure 2 is an exploded view of certain components illustrated in figure 1,
- figure 3 is a partial lateral view of the assembled components illustrated in figure 2,
- figure 4 is a partial perspective view of the components shown in figures 2-3,
- figure 5 is a schematic cross section view of the motor-vehicle structure according to the plane V-V shown in figure 1,
- figure 6 is a schematic cross section view of the motor-vehicle structure according to the plane VI-VI shown in figure 1.

In the present description and in the following claims, the term "transversal" is used with reference to a horizontal direction, generally indicated as "Y" direction by the skilled people in this field, which is perpendicular to the longitudinal direction of the motor-vehicle (such longitudinal direction is instead indicated as "X" direction, while the vertical direction is indicated by "Z").

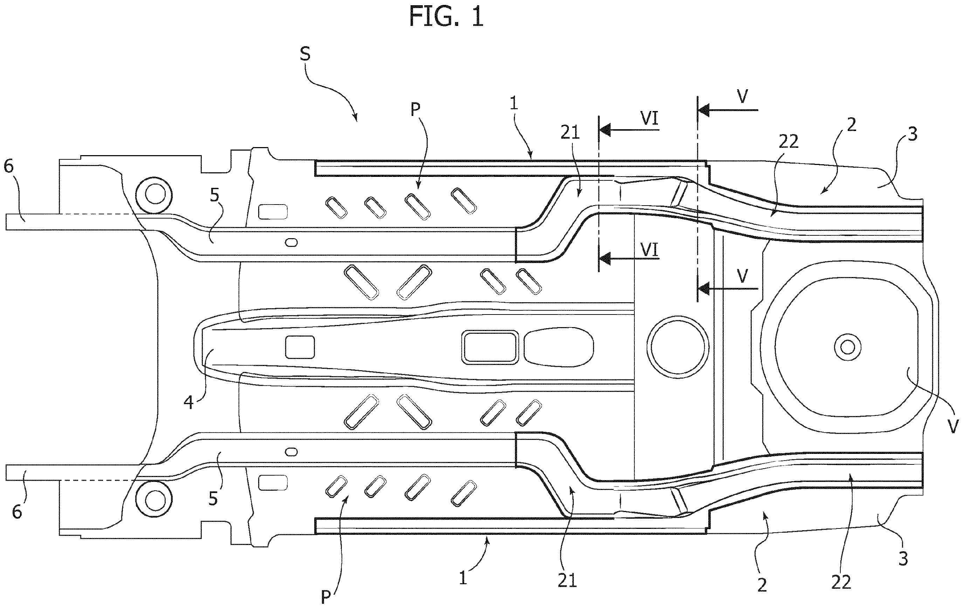

In the bottom view of figure 1, the reference S generally indicates a motor-vehicle structure according to the present invention comprising a floor structure P formed of metal sheet elements welded to each other. A lateral beam 1 is welded at each of two longitudinal sides of the floor structure P. In the specific illustrated example, the floor structure P further comprises a central longitudinal tunnel 4, two intermediate beams 5 which extend along the X direction in intermediate areas of the floor structure P between the lateral beams 1 and the central tunnel 4. Each intermediate beam 5 extends towards the front part of the floor structure P until joining with a longitudinal strut 6 and towards the rear part of the floor structure P until joining with a rear beam 2. The rear beams 2 extend from the rear end of the intermediate beams 5 up to the sides of the rear part of the floor structure P where a spare wheel housing V is located. Also in the motor-vehicle structure S two wheel housings 3 which are part of the upper-body of the motor-vehicle are welded to sides of the spare wheel housing V.

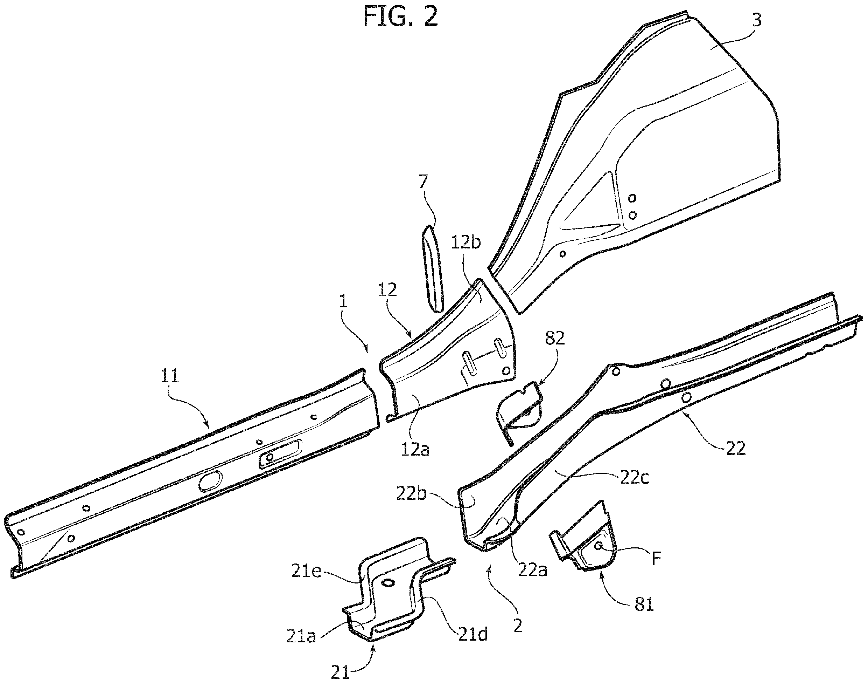

Figure 2 shows an exploded view of the motor-vehicle structure S components welded to each side of the floor structure P.

Each lateral beam 1 comprises a front lateral beam element 11 and a rear lateral beam element 12 welded to each other. The front and rear lateral beam element 11,12 have a cross-section defining a substantially vertically oriented omega shape.

The front lateral beam element 11 has a longitudinal extension particularly higher than the longitudinal extension of the rear lateral beam element 12.

Again with reference to the exploded view of figure 2, the rear beam 2 of figure 1 is shown. The rear beam 2 is composed by a first front element 21 and a second rear element 22 which are connected to each other in the motor-vehicle structure S according to the invention. The second rear element 22 has a longitudinal extension much longer than the longitudinal extension of the first front element 21. The first front element 21 has a substantially S-shaped body in such a way that its front part is connected to the respective intermediate beam 5 and its rear part is connected to the respective second rear element 22.

Figure 2 illustrates also an inner attachment bracket 81 and an outer attachment bracket 82 intended to form an attachment bracket 8 located at one of the opposite sides of the floor structure P. Each attachment bracket 8 is provided for the connection with a motor-vehicle suspension element (not illustrated in the drawings). The motor-vehicle suspension element can be a bushing element which is to constitute an upper portion of a suspension arm.

Figure 2 illustrates also a closing wall 7 which is to be welded inside the open cross-section with vertically oriented omega shape of the rear lateral beam element 12 in proximity of the outer attachment bracket 82.

Finally, again in figure 2, a wheel housing 3 is illustrated which constitutes a lateral rear wall of the motor-vehicle upper-body.

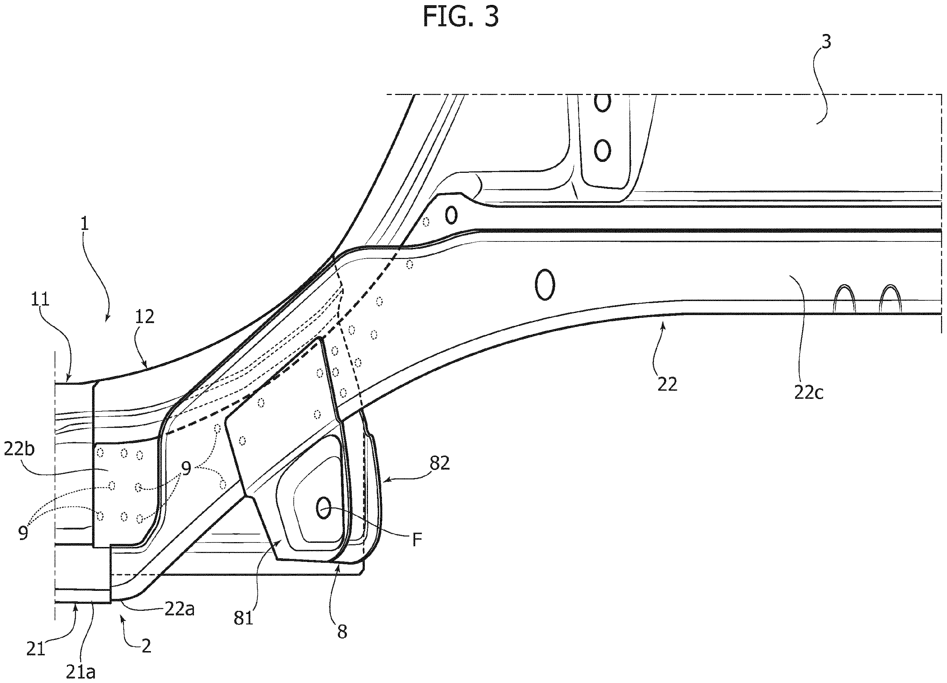

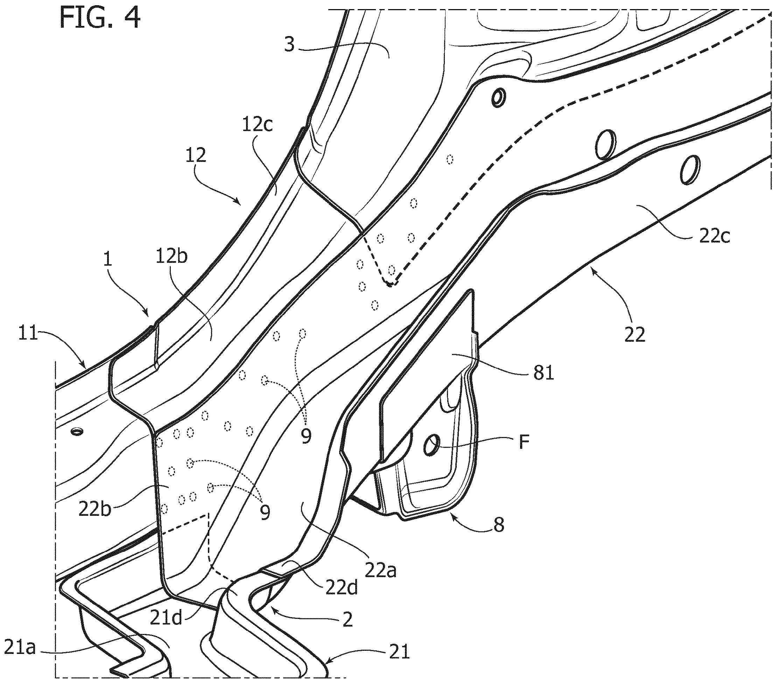

Figures 3,4 partially show the components of figure 2 in their assembled configuration respectively according to a lateral view and a perspective view.

As previously indicated, each lateral beam 1 comprises a front lateral beam element 11 and a rear lateral beam element 12 welded to each other so as to constitute a single lateral beam element 1. The elements 11,12 have both a cross-section with a vertically oriented omega shape.

Furthermore, as previously mentioned, each rear beam 2 is composed by a first front element 21 and a second rear element 22 welded to each other so as to constitute a single rear beam element 2. The second rear element 22 has a vertical wall 22b having a front portion adjacent to the rear lateral element 12 and a rear portion adjacent to the wheel housing 3 which is also welded to the rear lateral beam element 12. The second rear element 22 is welded to the rear lateral beam element 12 and to the wheel housing 3 by means of the application of a plurality of welding spots 9 along the vertical wall 22b both in its front portion adjacent to the rear lateral beam element 12 and in its rear portion adjacent to the wheel housing 3. In the case of an actual embodiment, the vertical wall 22b is overlapped to the rear lateral beam element and is welded with a plurality of welding spots 9.

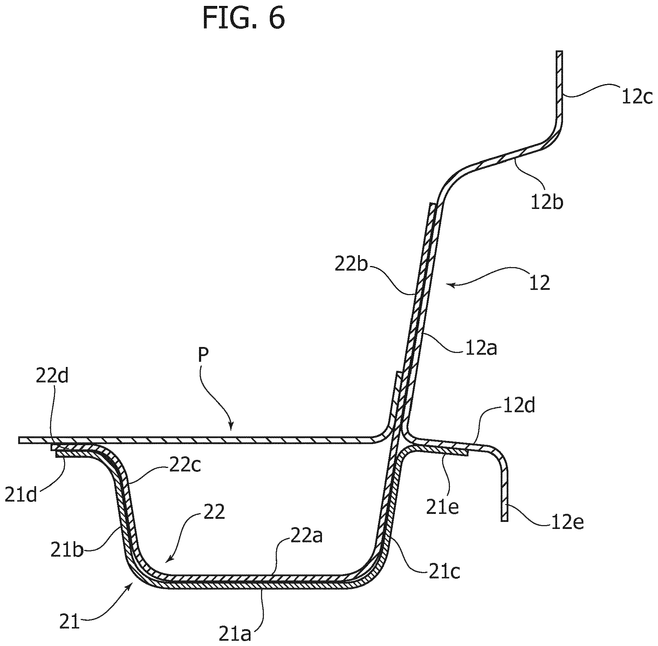

Again according to the structure S shown in figures 3,4 the second rear element 22 further has a substantially horizontal bottom wall 22a and a second vertical wall 22c which is opposite to the vertical wall 22b. The front portion of the second vertical wall 22c has a vertical extension much shorter than the vertical extension of the rear portion of the second vertical wall 22c so as to allow for the interposition of the floor structure P. Furthermore, as also illustrated in the cross-section view of figure 6, the first front element 21 has a substantially horizontal bottom wall 21a having a rear portion covered by the front portion of the bottom wall 22a of the second rear element 22.

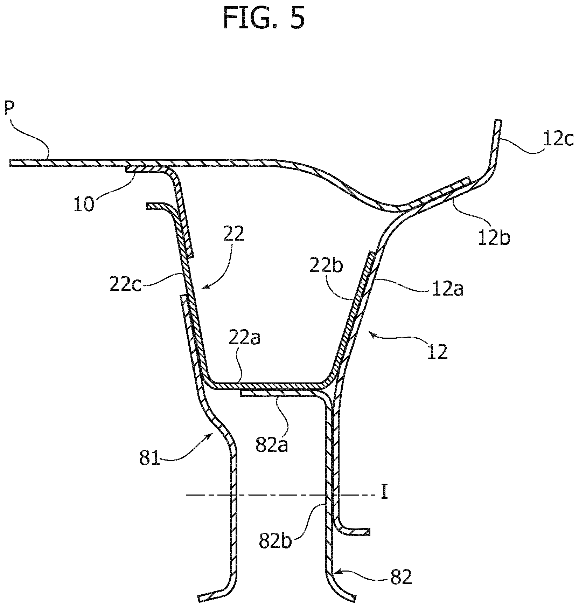

In particular with reference to figure 3, the attachment bracket 8 is associated to the respective rear beam 2. As previously said, the bracket 8 is provided for the connection with a motor-vehicle suspension element here not illustrated. In particular, the bracket 8 comprises the inner bracket 81 and the outer bracket 82 which are both welded to the second rear element 22. The inner bracket 81 and the outer bracket 82 are connected to the structure S so as to be substantially parallel to, and spaced from, each other. In particular, with reference to figure 3, the aforementioned brackets 81,82 have respective holes F which are in line to each other according to an axis I (as illustrated in figure 5). The holes F are provided for receiving ends of a connection bushing (not illustrated) of a suspension system component (such as a pivoted arm of the suspension system).

Figure 5 shows a diagrammatic cross-sectional view according to line V-V of figure 1. The rear lateral beam element 12 is welded to a lateral edge of the floor structure P at an upper wall 12b which is inclined upwardly towards a horizontal direction. The vertical wall 22b of the second rear element 22 is welded to the rear lateral beam element 12 at an intermediate wall 12a of the rear lateral beam element 12. The second rear element 22 has the opposite vertical wall 22c welded in its upper portion to a connection element 10 which is also welded to the floor structure P.

As previously said, the inner bracket 81 and the outer bracket 82 are welded to the second rear element 22, the inner bracket 81 is welded in its upper portion to the vertical wall 22c of the second rear element 22. The outer bracket 82 has instead a substantially horizontal upper bracket portion 82a welded below the horizontal wall 22a of the second rear element 22 and it has a substantially vertical lower bracket portion 82b welded to the intermediate wall 12a of the rear lateral beam element 12.

Figure 6 shows a diagrammatic view in cross-section of the structure S according to the line VI-VI shown in figure 1. As illustrated in figure 1, the cross-section of figure 6 is taken at a location more advanced towards the front part of the motor-vehicle, compared to the cross-section of figure 5. As previously said, the rear lateral beam element 12 has a cross-section with a vertically oriented omega shape. The element 12 presents the intermediate wall 12a, an upper wall 12b and a lower wall 12d. The walls 12b,12d are slightly inclined towards a horizontal direction, one upwardly and the other downwardly, respectively in direction of an upper vertical flange 12c and of a lower vertical flange 12e. The first front element 21 has a cross-section with an inverted omega shape wherein is present the bottom wall 21a and two walls 21b,21c slightly inclined towards a vertical direction, respectively in direction of an inner horizontal flange 21d and of an outer horizontal flange 21e. The inner flange 21d is welded below the floor structure P while the outer flange 21e is welded to the rear lateral beam element 12 at its lower wall 12d.

Again with reference to the cross-sectional view of figure 6, the second rear element 22 has the bottom horizontal wall 22a overlapped to the horizontal wall 21a of the first front element 21. As previously said, the vertical wall 22b is welded to the intermediate wall 12a of the rear lateral beam element 12. Instead, the vertical wall 22c results to be adjacent to the vertical wall 21d of the first front element 21. A horizontal flange 22d is present at the upper end of the vertical wall 22c and is welded to the floor P with the flange 21d of the front element 28.

The motor-vehicle structure S described according to the present invention allows a relatively high torsional stiffness to be obtained with a motor-vehicle structure of a relatively low weight and simple to be manufactured.

Furthermore, the structure S according to the present invention allows a control of the deformation areas resulting from a rear impact in such a way that the motor-vehicle structure is deformed at predetermined areas thereof.

Naturally, while the principle of the invention remains the same, the details of construction and the embodiments may widely vary with respect to what has been described and shown purely by way of example, without departing from the scope of the invention.

## Claims

1. Motor-vehicle structure (S), comprising:
- a floor structure (P),
- two lateral beams (1) each welded to a respective longitudinal lateral edge of the floor structure (P),
- two rear beams (2) wherein each rear beam (2) is composed by a first front element (21) and a second rear element (22) connected to each other, wherein said first front element (21) is welded to said floor structure (P) and to the respective lateral beam (1) and said second rear element (22) is welded to said lateral beam (1),
- two attachment brackets (8) each positioned at one of the opposite sides of the floor structure (P), wherein each attachment bracket (8) is provided for the connection to a motor-vehicle suspension element, and is connected to the respective second rear element (22),
said motor-vehicle structure (S) being **characterized in that**:
- each lateral beam (1) comprises a front lateral beam element (11) and a second rear lateral beam element (12) welded to each other,
- each attachment bracket (8) comprises an inner bracket (81) and an outer bracket (82), wherein said inner bracket (81) is welded to said second rear element (22) and said outer bracket (82) is welded to said second rear element (22) and to said rear lateral beam element (12),
- said second rear element (22) has a substantially vertical wall (22b) adjacent to said rear lateral beam element (12), wherein said second rear element (22) and said rear lateral beam element (12) are welded to each other at said substantially vertical wall (22b).

2. Motor-vehicle structure according to claim 1, **characterized in that** said outer bracket (82) has a substantially horizontal upper bracket portion (82a) welded to said second rear element (22) and a substantially vertical lower bracket portion (82b) welded to said rear lateral beam element (12).

3. Motor-vehicle structure according to claim 1, **characterized in that** said substantially vertical wall (22b) of said second rear element (22) has a rear portion adjacent and welded to a respective wheel housing (3).

4. Motor-vehicle structure according to claim 1, **characterized in that** said first front element (21) and said second rear element (22) each have a lower bottom wall (21a, 22a), wherein the lower bottom wall (22a) of the second rear element (22) is partially overlapped to the lower wall (21a) of the first front element (21).

5. Motor-vehicle structure according to claim 1, **characterized in that** said rear lateral beam element (12) has a cross-section with a vertically oriented omega shape and has a closing wall (7) interposed inside said omega-shaped cross-section in proximity of said inner bracket (81).

## Patentansprüche

1. Kraftfahrzeug-Struktur (S), die umfasst:
- eine Bodenstruktur (P),
- zwei seitliche Träger (1), die jeweils an einer entsprechenden Längsseiten-Kante der Bodenstruktur (P) angeschweißt sind,
- zwei hintere Träger (2), wobei jeder hintere Träger (2) aus einem ersten, vorderen Element (21) und einem zweiten, hinteren Element (22) besteht, die miteinander verbunden sind, das erste, vordere Element (21) an der Bodenstruktur (P) sowie an dem entsprechenden seitlichen Träger (1) angeschweißt ist und das zweite, hintere Element (22) an dem seitlichen Träger (1) angeschweißt ist,
- zwei Halter (8), die jeweils an einer der einander gegenüberliegenden Seiten der Bodenstruktur (P) positioniert sind, wobei jeder Halter (8) der Verbindung mit einem Kraftfahrzeug-Aufhängungselement dient und mit dem entsprechenden zweiten, hinteren Element (22) verbunden ist,
und die Kraftfahrzeug-Struktur (S) **dadurch gekennzeichnet ist, dass**:
- jeder seitliche Träger (1) ein vorderes Element (11) des seitlichen Trägers sowie ein zweites, hinteres Element (12) des seitlichen Trägers umfasst, die miteinander verschweißt sind,
- jeder Halter (8) einen inneren Halter (81) und einen äußeren Halter (82) umfasst, wobei der innere Halter (81) an dem zweiten, hinteren Element (22) angeschweißt ist und der äußere Halter (82) an dem zweiten, hinteren Element (22) sowie dem hinteren Element (12) des seitlichen Trägers angeschweißt ist,
- das zweite, hintere Element (22) eine im Wesentlichen vertikale Wand (22b) hat, die an das hintere Element (12) des seitlichen Trägers angrenzt, und das zweite, hintere Element (22) und das hintere Element (12) des seitlichen Trägers an der im Wesentlichen vertikalen Wand (22b) miteinander verschweißt sind.

2. Kraftfahrzeug-Struktur nach Anspruch 1, **dadurch gekennzeichnet, dass** der äußere Halter (82) einen im Wesentlichen horizontalen oberen Halter-Abschnitt (82a), der an dem zweiten, hinteren Element (22) angeschweißt ist, sowie einen im Wesentlichen vertikalen unteren Halter-Abschnitt (82b) aufweist, der an dem hinteren Element (12) des seitlichen Trägers angeschweißt ist.

3. Kraftfahrzeug-Struktur nach Anspruch 1, **dadurch gekennzeichnet, dass** die im Wesentlichen vertikale Wand (22b) des zweiten, hinteren Elementes (22) einen hinteren Abschnitt aufweist, der an einen entsprechenden Radkasten (3) angrenzt und daran angeschweißt ist.

4. Kraftfahrzeug-Struktur nach Anspruch 1, **dadurch gekennzeichnet, dass** das erste, vordere Element (21) und das zweite, hintere Element (22) jeweils eine untere Bodenwand (21a, 22a) aufweisen, wobei die untere Bodenwand (22a) des zweiten, hinteren Elementes (22) die untere Wand (21a) des ersten, vorderen Elementes (21) teilweise überlappt.

5. Kraftfahrzeug-Struktur nach Anspruch 1, **dadurch gekennzeichnet, dass** das hintere Element (12) des seitlichen Trägers einen Querschnitt mit einer vertikal ausgerichteten Omega-Form hat und eine verschließende Wand (7) aufweist, die im Inneren des omega-förmigen Querschnitts nahe an dem inneren Halter (81) angeordnet ist.

## Revendications

1. Structure de véhicule automobile (S), comprenant :
- une structure de plancher (P),
- deux poutres latérales (1) soudées chacune à un bord latéral longitudinal respectif de la structure de plancher (P),
- deux poutres arrière (2) où chaque poutre arrière (2) est composée d'un premier élément avant (21) et d'un deuxième élément arrière (22) reliés l'un à l'autre, où ledit premier élément avant (21) est soudé à ladite structure de plancher (P) et à la poutre latérale respective (1) et ledit deuxième élément arrière (22) est soudé à ladite poutre latérale (1),
- deux attaches de fixation (8) positionnées chacune au niveau de l'un des côtés opposés de la structure de plancher (P), où chaque attache de fixation (8) est prévue pour être reliée à un élément de suspension de véhicule automobile, et est reliée au deuxième élément arrière respectif (22),
ladite structure de véhicule automobile (S) étant **caractérisée en ce que** :
- chaque poutre latérale (1) comprend un élément de poutre latérale avant (11) et un deuxième élément de poutre latérale arrière (12) soudés l'un à l'autre,
- chaque attache de fixation (8) comprend une attache interne (81) et une attache externe (82), où ladite attache interne (81) est soudée audit deuxième élément arrière (22) et ladite attache externe (82) est soudée audit deuxième élément arrière (22) et audit élément de poutre latérale arrière (12),
- ledit deuxième élément arrière (22) présente une paroi sensiblement verticale (22b) adjacente audit élément de poutre latérale arrière (12), où ledit deuxième élément arrière (22) et ledit élément de poutre latérale arrière (12) sont soudés l'un à l'autre au niveau de ladite paroi sensiblement verticale (22b).

2. Structure de véhicule automobile selon la revendication 1, **caractérisée en ce que** ladite attache externe (82) présente une partie d'attache supérieure sensiblement horizontale (82a) soudée audit deuxième élément arrière (22) et une partie d'attache inférieure sensiblement verticale (82b) soudée audit élément de poutre latérale arrière (12).

3. Structure de véhicule automobile selon la revendication 1, **caractérisée en ce que** ladite paroi sensiblement verticale (22b) dudit deuxième élément arrière (22) présente une partie arrière adjacente et soudée à un passage de roue respectif (3).

4. Structure de véhicule automobile selon la revendication 1, **caractérisée en ce que** ledit premier élément avant (21) et ledit deuxième élément arrière (22) présentent chacun une paroi de fond inférieure (21a, 22a), où la paroi de fond inférieure (22a) du deuxième élément arrière (22) chevauche partiellement la paroi inférieure (21a) du premier élément avant (21).

5. Structure de véhicule automobile selon la revendication 1, **caractérisée en ce que** ledit élément de poutre latérale arrière (12) présente une section transversale ayant une forme d'oméga orientée verticalement et présente une paroi de fermeture (7) interposée à l'intérieur de ladite section transversale en forme d'oméga à proximité de ladite attache interne (81).
